# EUROPEAN PATENT APPLICATION

(11) **EP 4 357 115 A1**
(43) Date of publication of application: **24.04.2024**
(21) Application number: 22425050.6
(22) Date of filing: 19.10.2022
(51) Int. Cl.: B29D 11/00

(54) **METHOD FOR MANUFACTURING A TRANSPARENT PLASTIC LENS WITH EMBEDDED DECORATIVE ELEMENTS**

(71) Applicant: BARBERINI, S.p.A., 64028 Silvi (TE) (IT)
(72) Inventor: Lagasi, Matteo, 10124 Torino (IT); Simeone, Antonio, 10153 Torino (IT)
(74) Representative: Zanardo, Giovanni

(57) **Abstract**

The present invention relates to a method for manufacturing a molded ophthalmic article (1) comprising at least one decorative element (2), said method comprises the steps of:
a- providing a mold (100) comprising a first mold element (102) and a second mold element (104) configured to cooperate together in a closed position to define a cavity (3),
b- fixing said at least one decorative element (2) inside said cavity (3),
c- casting a molding liquid comprising monomers of a transparent plastic material or injecting a transparent thermoplastic material inside said cavity (3),
d- curing said molding liquid comprising monomers of a transparent plastic material or cooling said transparent thermoplastic material and demolding said mold (100) to obtain a molded ophthalmic article (1) comprising at least one decorative element (2).

## Description

The present invention relates to a method for manufacturing a transparent plastic lens with at least one in-mass embedded decorative element of different shapes, dimensions, materials and aesthetic effects.

The term transparent plastic lens refers to a corrective lens or to a lens without any corrective power. The lenses can be used as spectacle glass, sunglasses for eye protection, goggles, visors or a high fashion item.

Eyeglasses or sunglasses normally are meant for medical functions, in particular to protect the eye from Solar Radiation or from physical harm, to ease vision or to correct the vision of the wearer. In the current industry is becoming more and more important the level of personalization and aesthetic that is requested by the final customer. For that reason, expanding the possible technologies available in order to obtain new aesthetic effects creates value for the customer.

In the modern industry, the spectacle frames are generally made from polymers or metals using different manufacturing technologies. Many decoration techniques are known and used to decorate, engrave and enrich the frames composing the spectacle. Those technologies are scalable, reliable and widely available.

However, concerning the lenses, the possible portfolio of decorative techniques is limited. In particular, techniques that are easy to implement and offer a wide range of decoration possibilities with an industrial application are not easily available. Such decorations must then keep intact the main characteristics of a lens, corrective or not, such as transparency and optical quality without interfering with the vision of the final user or without compromising the mechanical characteristics of the lens.

Today, decoration of the lenses often consists in applying for example an interference filter on the lenses to get a mirror effect or a specific tinted color in transmission. Also branding for example is done on the surface of the lenses with several technologies, but the interested area is always limited to a small portion. Examples of decoration technologies include inkjet printing, vacuum coating mirroring, tampo-printing, laser marking. In any case, these types of decorations leave the aesthetic element exposed to damage, or in general give no tridimensional depth effect and are limited in the field of application, since they are always taken from different businesses and industry fields.

Considering these notions, an innovative improvement in the field would be one to protect the decoration, allow the encapsulation of different 3D or 2D elements of different materials inside the mass of the transparent plastic lens, protecting them from external damage and thus improving the overall quality of the decorated optical lens. This would also unlock new aesthetic effects and combinations.

For 3D elements are intended decorative elements such as diamonds, pearls, crystals, gemstones, metal pieces and all other kind of decorative and/or aesthetical elements having non-planar dimensions. In particular, they may vary in dimensions, shapes, colors, materials (both organic and inorganic) or with added visual functionality like photo luminescent, phosphorescent or photochromic effects

For 2D elements are intended decorative and/or aesthetical elements having planar dimensions.

The present invention therefore aims to propose a method for manufacturing a transparent plastic lens with at least one embedded decorative element as set forth in claim 1.

Further characteristics of the device are the subject of the dependent claims.

The characteristics and advantages of a method according to the present invention will become more evident from the following description, exemplifying and not limiting, referring to the attached schematic drawings in which:
- Figure 1 is a scheme relating to a first embodiment according to the present invention,
- Figure 2 is a scheme relating to the first embodiment according to the present invention, wherein one of the mold elements itself is obtained by molding a transparent plastic material,
- Figures 3 and 4 are schemes relating to the first embodiment according to the present invention wherein one of the mold elements itself is obtained by molding a transparent plastic material and the ophthalmic article is subjected to a step of surfacing;
- Figure 5 is a scheme relating to a second embodiment according to the present invention.

The main concept of the proposed innovative method comprises the following essential steps:
a- providing a mold 100 comprising a first mold element 102 and a second mold element 104 configured to cooperate together in a closed position to define a cavity 3,
b- fixing said at least one decorative element 2 inside said cavity 3,
c- casting a molding liquid comprising monomers of a transparent plastic material or injecting a transparent thermoplastic material inside said cavity 3,
d- curing said molding liquid comprising monomers of a transparent plastic material or cooling said transparent thermoplastic material and demolding said mold 100 to obtain a molded ophthalmic article 1 comprising at least one decorative element 2.

According to the invention, the mold elements 102, 104 can be of variable dimensions, bases and thickness (preferably, the thickness is from 0.5 mm up to 10 mm). The thickness of the cavity obtained between the mold elements 102, 104 determines the final thickness of the ophthalmic article 1.

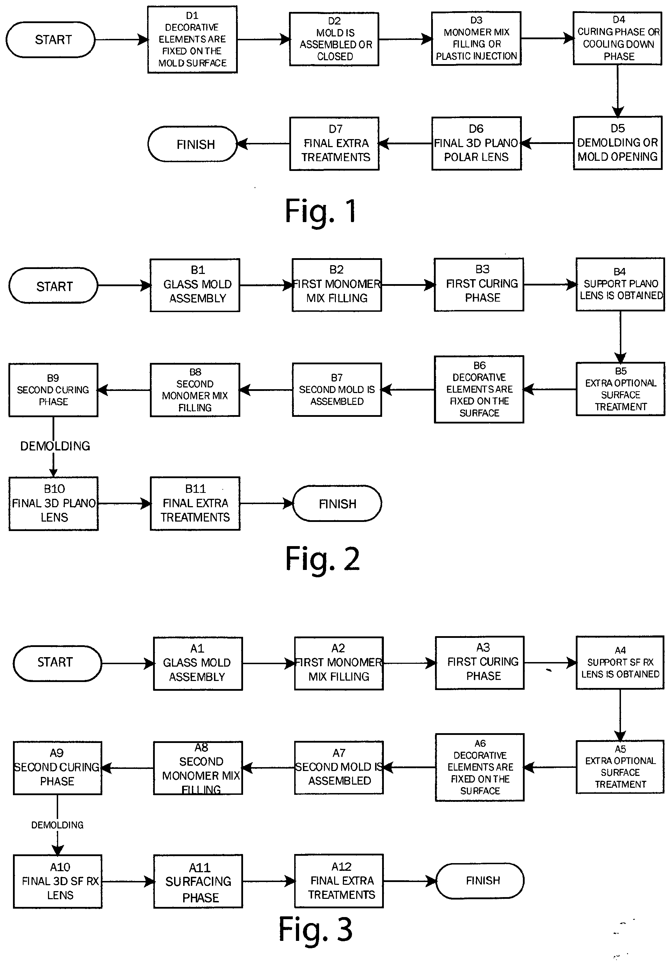

Figure 1 summarizes the method according to the first embodiment, wherein the at least one decorative element 2 in step b is fixed on the first mold element 102 or on the second mold element 104 by any mechanical or chemical means.

The at least one decorative element can be placed on the surface of the first mold element 102 or on the second mold element 104, following a specific decorative pattern, and then is anchored or glued or fixed by any mechanical, physical or chemical mean.

This process can be automatized or can be executed manually.

Polymeric glue of different nature or any adhesive material can be used to support the placing and fixation of the at least one decorative element onto the surface of the first mold element 102 or on the second mold element 104.

The at least one decorative element can present in some cases a ready to use adhesive layer specifically designed to interact with the interface between the at least one decorative element and the surface of the first mold element 102 or on the second mold element 104.

Advantageously, and as can been seen from figures 2, 3 and 4, the second mold element 104 can be obtained by molding a second transparent plastic material, such molding of the second transparent plastic material may comprise the steps of casting and curing a second molding liquid comprising monomers of the second transparent plastic material. Afterwards, the at least one decorative element 2 in step b can be fixed on the second mold element 104.

Alternatively, the second mold element 104 can be manufactured through an injection process of a transparent thermoplastic material inside a mold.

Specifically, for the casting process as the preferred manufacturing method, a glass mold comprised of two distinctive glass lenses is assembled with the support of an elastomeric band or with the support of an adhesive tape.

The glass lenses used for the mold assembly can be spherical, toric, cylindrical, flat, curved or of any possible geometry. The mold is then filled with a reactive mixture of monomers.

Typical monomers for the manufacturing of cast optical articles comprise CR-39 and Trivex TM manufactured by PPG Industries and MR-7, MR-8, MR-10, MR-160DG manufactured by Mitsui Chemicals.

The mold then undergoes a thermal or photochemical process that will trigger the curing process of the monomers mixture.

Finally, after a demolding process the second mold element 104 is obtained.

Considering the many possible combination of materials and shapes contemplated in this innovative decorative method, an extra step can be proposed in order to promote quality and compatibility between materials, or to create particular aesthetical effects.

The second mold element 104 with the at least one decorative element can be treated using different surface treatment technologies like varnish/primer or inks application via different methods, chemical etching of the surface, chemical functionalization, plasma etching, corona etching or in general vacuum physical-chemical surface treatments and/or depositions.

Alternatively, only the at least one decorative element can undergo the same surface treatments before being anchored on the surface of the second mold element 104.

Advantageously, the curing of said second molding liquid comprising monomers of the second transparent plastic material is incomplete so as to form chemical bonding between said second mold element 104 and said at least one decorative element 2 during curing in step d.

The second mold element 104 (with the at least one decorative element anchored on its surface following a particular pattern or positioning) can be used as a structural element of a second mold, i.e. the mold in step d.

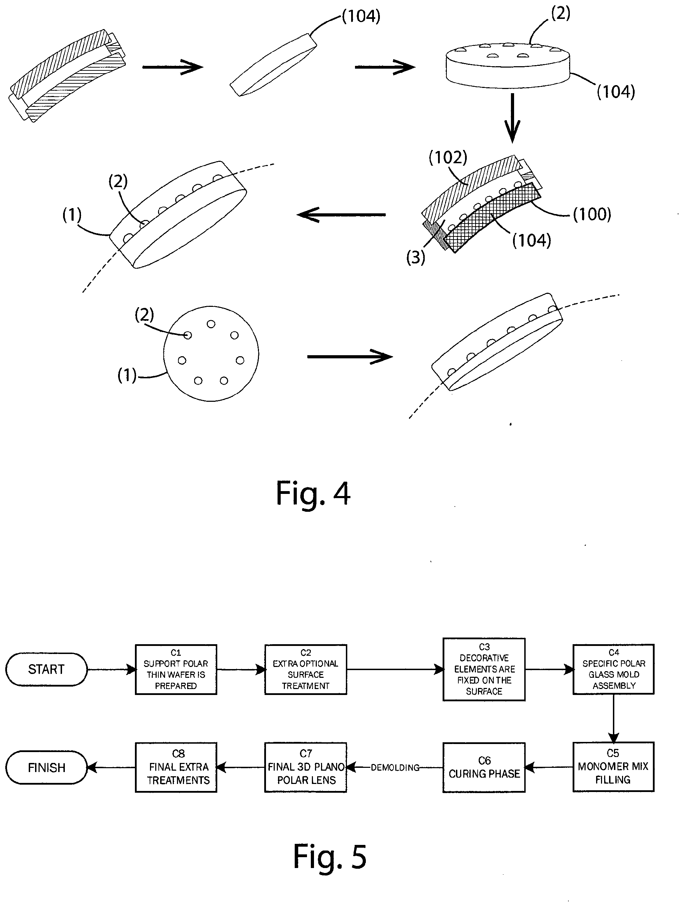

Figure 5 summarizes the method according to the second embodiment of the present invention, wherein in step b, the at least one decorative element 2 is anchored onto a support polymeric thin wafer so as to be fixed inside said cavity 3.

Advantageously, the wafer can be a transparent carrier film or a functional one with polarizing, light absorbing or light reflecting characteristics, or a combination of these.

Its thickness could vary between 20 microns to 0.8 millimeters.

The polymeric materials used for such wafer can vary and are known to those skilled in the art.

The wafer is positioned inside the cavity mold being fixed directly on the surface of the first mold element 102 or on the second mold element 104, or can be kept in place at a certain distance from the cavity surfaces using a particular elastomeric gasket or adhesive tape.

The main advantage of the method according to the second embodiment is that only one monomer mixture filling is required inside the mold, as the monomers will fill the cavity on both sides of the wafer, thus encapsulating the whole support wafer with the at least one decorative element.

Advantageously, according to the first or the second embodiment, the method further comprising before step b a step of surface treatment of said at least one decorative element 2, wherein said step of surface treatment are selected from one or more of varnish/primer, inks application, chemical etching of the surface, chemical functionalization, plasma etching, corona etching or vacuum physical-chemical surface treatments and/or depositions.

After fixing the at least one decorative element 2 inside the cavity 3 according to the first or second embodiment, the molding in steps c and d of the present invention takes place in the same method of molding the second transparent plastic material to obtained the second mold element 104 as described above.

The molding liquid comprising monomers of a transparent plastic material is casted inside the cavity 3, which can present the same chemical nature of the second transparent plastic material or a different one.

After a similar curing and demolding process, the final molded ophthalmic article 1 is obtained, with the at least one decorative element encapsulated and protected in its mass.

Alternatively, the molding in steps c and d of the present invention may take place by heating and injecting a transparent thermoplastic material inside the cavity. The type of the transparent thermoplastic material and the operating conditions are known for the person skilled in the art.

Afterword, the transparent thermoplastic material is cooled and the mold 100 is open, the final molded ophthalmic article 1 is obtained with the at least one decorative element encapsulated and protected in its mass.

Preferably, and as can be shown in figures 3 and 4, the molded ophthalmic article 1 can be subjected to a step of surfacing to reduce its thickness and optionally to obtain an optical power.

Alternatively, the molded ophthalmic article 1 is adapted to have a predefined thickness without the need of a step of surfacing.

The at least one decorative element in all methods described can vary in dimensions, shapes, colors, materials (both organic and inorganic) or with added visual functionality like photo luminescent, phosphorescent or photochromic effects.

The at least one decorative element can be bidimensional, including resin layers applied by pad printing or ink-jet or tri-dimensional in space, such as cabochon or other jewelry elements. Based on the color and treatments of the second mold element 104, different and new aesthetic effects can be obtained.

In particular, the thickness of the at least one decorative element shall be at most about 80% of the thickness d of the ophthalmic article lens 1 at the location where the at least one decorative element is embedded.

Preferably, the at least one decorative element may be fixed using an adhesive material, more preferably comprising a cyanoacrylate or an acrylic compound.

The at least one decorative element may be transparent or present similar or identical refractive indexes compared to the refractive indexes of the transparent plastic materials used for manufacturing the molded ophthalmic article and it has no ability to induce a local alteration of the visible light transmission of the molded ophthalmic article 1. In this case, the at least one decorative element 2 can be placed across the whole surface of the molded ophthalmic article.

On the contrary, in the case the at least one decorative element is not transparent and is visible or the at least one decorative element 2 can induce a local alteration of the visible light transmission of the molded ophthalmic article 1, its positioning on the surface of the ophthalmic article should be designed with care and attention.

A specific central area of the lens, a 30mm circle around the optical center of the lens per ISO 12312 2022, must be free of any decoration in order to maintain intact the vision comfort of the final user.

The transparent plastic material, the second transparent plastic material and/or the support polymeric thin wafer can present extra functionalities and characteristics, for example included but not limited to are: photochromic layers, contrast enhancement filters, vacuum coated surfaces, anti-reflective coatings or combination thereof.

Advantageously, a single monomer mixture can be used instead of the reactive monomers mixture. Any thermosetting or thermoplastic material that can be normally processed without lowering the quality of the final product.

Normally, when using thermoplastic materials the Injection molding process will be the preferred industrial method for filling the mold.

In that case, the lens mold can be made of glass or steel with the appropriate grade and relative surface treatments known to those skilled in the art.

Also, in the alternative case of the injection molding, the mold will be kept closed with the mechanical clamping force of the injection molding equipment.

For use in spectacles or sunglasses, the outer edge 3 is shaped according to the desired shape of the frame of the eyeglasses or sunglasses.

Another object of the present invention is a molded ophthalmic article 1 obtained by the method according to the present invention.

By ophthalmic article 1 is meant a corrective lens or (plano-lens), finished or semi-finished, suitable for being mounted in a frame, for example a spectacle frame, goggles, a mask or a visor intended to be placed in front of the eyes and forming a screen of visual protection.

At this stage the ophthalmic article 1 which has not been submitted to further treatments, can be considered as a lens blank element.

In this context, treatments conferring additional functions, either alone or in combination among the following non-exhaustive list: shockproof, anti-scratch, anti-abrasion, anti-reflective, anti-fouling, antifogging, anti-static are not considered as additional layers.

These additional functions can be carried out according to conventional methods (soaking, vacuum deposition, spin coating, spray coating, etc.).

Several of these treatments may be applied before or after the creation of the final ophthalmic article.

The material of the decorative object 2 can be chosen to be compliant with the chosen molding process, which can be an injection molding process or a cast molding process.

Advantageously, it shall also be chosen not to liberate gazes in order to avoid formation of bubbles during injection or during curing in case of casting in function of the chosen molding process.

The extracted ophthalmic article 1 can be used as such, shaped to a requested form or undergo as mentioned above one or several additional treatments like deposition of a hard coat treatment, an anti-reflection treatment and/or a mirroring treatment etc.

## Claims

1. Method for manufacturing a molded ophthalmic article (1) comprising at least one decorative element (2), said method comprises the steps of:
a- providing a mold (100) comprising a first mold element (102) and a second mold element (104) configured to cooperate together in a closed position to define a cavity (3),
b- fixing said at least one decorative element (2) inside said cavity (3),
c- casting a molding liquid comprising monomers of a transparent plastic material or injecting a transparent thermoplastic material inside said cavity (3),
d- curing said molding liquid comprising monomers of a transparent plastic material or cooling said transparent thermoplastic material and demolding said mold (100) to obtain a molded ophthalmic article (1) comprising at least one decorative element (2).

2. Method for manufacturing a molded ophthalmic article (1) according to claim 1, wherein said at least one decorative element (2) in step b is fixed on said first mold element (102) or said second mold element (104) by any mechanical or chemical means.

3. Method for manufacturing a molded ophthalmic article (1) according to claim 1 or 2, wherein said second mold element (104) is obtained by molding a second transparent plastic material, said molding of said second transparent plastic material comprises steps of casting and curing a second molding liquid comprising monomers of said second transparent plastic material, in step b, said at least one decorative element (2) is fixed on said second mold element (104).

4. Method for manufacturing a molded ophthalmic article (1) according to claim 3, wherein said curing of said second molding liquid comprising monomers of said second transparent plastic material is incomplete so as to form chemical bonding between said second mold element (104) and said at least one decorative element (2) during curing in step d.

5. Method for manufacturing a molded ophthalmic article (1) according to claim 1, wherein in step b, said at least one decorative element (2) is anchored onto a support polymeric thin wafer so as to be fixed inside said cavity (3).

6. Method for manufacturing a molded ophthalmic article (1) according to claim 5, wherein said support polymeric thin wafer is a transparent carrier film or a functional film having polarizing, light absorbing or light reflecting characteristics, or combinations thereof.

7. Method for manufacturing a molded ophthalmic article (1) according to any one of the preceding claims, further comprising before step b a step of surface treatment of said at least one decorative element (2), wherein said step of surface treatment are selected from one or more of varnish/primer, inks application, chemical etching of the surface, chemical functionalization, plasma etching, corona etching or vacuum physical-chemical surface treatments and/or depositions.

8. Method for manufacturing a molded ophthalmic article (1) according to any one of the preceding claims, wherein said molded ophthalmic article (1) is subjected to a step of surfacing to reduce its thickness and optionally obtain an optical power.

9. Method for manufacturing a molded ophthalmic article (1) according to any one of the preceding claims 1 to 7, wherein, said molded ophthalmic article (1) are adapted to have a predefined thickness without a step of surfacing.

10. Method for manufacturing a molded ophthalmic article (1) according to any one of the preceding claims, wherein said at least one decorative element has added visual functionality selected from photo luminescent, phosphorescent or photochromic effects or combinations thereof.

11. Method for manufacturing a molded ophthalmic article (1) according to any one of the preceding claims, wherein said at least one decorative element has a maximum thickness of about 80% of a thickness of said ophthalmic article lens (1) where said at least one decorative element (2) is fixed.

12. Method for manufacturing a molded ophthalmic article (1) according to any one of the preceding claims, wherein said transparent plastic material, said second transparent plastic material and/or said support polymeric thin wafer have extra functionalities and characteristics selected from photochromic layers, contrast enhancement filters, vacuum coated surfaces, anti-reflective coatings and combination thereof.

13. Method for manufacturing a molded ophthalmic article (1) according to any one of the preceding claims, wherein, in step b, said at least one decorative element (2) is fixed using an adhesive material, preferably comprising a cyanoacrylate or an acrylic compound.

14. Method for manufacturing a molded ophthalmic article (1) according to any one of the preceding claims, wherein said at least one decorative element (2) is transparent or present similar or identical refractive indexes compared to the refractive indexes of said transparent plastic materials, wherein said at least one decorative element (2) has no ability to induce a local alteration of the visible light transmission of said molded ophthalmic article (1), wherein said at least one decorative element (2) is placed across the whole surface of said molded ophthalmic article (1).

15. Method for manufacturing a molded ophthalmic article (1) according to any one of the preceding claims 1 to 13, wherein said at least one decorative element (2) is visible or said at least one decorative element (2) can induce a local alteration of the visible light transmission of said molded ophthalmic article (1), said at least one decorative element (2) is placed across the surface of said molded ophthalmic article (1) apart from 30 mm circle around the optical center of said molded ophthalmic article (1).

16. Molded ophthalmic article (1) obtained by a method according to any one of the preceding claims.
